# EUROPÄISCHE PATENTSCHRIFT

(11) **EP 3 450 811 B1**
(45) Veröffentlichungstag und Bekanntmachung des Hinweises auf die Patenterteilung: **09.09.2020**
(21) Anmeldenummer: 18201364.9
(22) Anmeldetag: 27.05.2015
(51) Int. Cl.: F16L 3/123, F16B 2/06, F16L 55/035

(54) **SCHELLE**
CLAMP
COLLIER DE SERRAGE

(30) Priorität: 27.05.2014 DE 102014107442
(43) Veröffentlichungstag der Anmeldung: 06.03.2019
(62) Teilanmeldung aus: 15724326.2
(73) Patentinhaber: NORMA Germany GmbH, 63477 Maintal (DE)
(72) Erfinder: SOMMER, Michael, 63654 Büdingen (DE); SCHMIDT, Frank, 63505 Langenselbold (DE); GEPPERT, Helmut, 63791 Karlstein (DE)
(74) Vertreter: Patentanwälte Olbricht Buchhold Keulertz

(56) Entgegenhaltungen:
- EP-A1- 2 280 206
- EP-A2- 1 852 643
- DE-A1- 19 716 632
- DE-U1- 9 214 700
- US-A- 2 409 772

## Beschreibung

Die Erfindung betrifft eine Schelle, insbesondere zum Befestigen von rohrförmigen Gegenständen an einer Unterlage, mit einem Schellenband mit einem ersten Umfangsende, das einen ersten Schenkel aufweist, und einem zweiten Umfangsende, das einen zweiten Schenkel aufweist und mit mindestens einer Lasche, die auf mindestens einem der Schenkel auf einer dem jeweils anderen Schenkel gegenüberliegenden Seite angeordnet ist.

Eine derartige Schelle ist beispielsweise aus EP 1 852 643 A2 bekannt. Das Schellenband einer derartigen Schelle ist C-förmig gebogen und umschließt einen Aufnahmeraum. In diesem Aufnahmeraum kann beispielsweise ein Rohr, oder ein anderer Gegenstand mit einer kreisringförmigen Querschnittgeometrie positioniert werden. Durch Aufeinanderlegen der beiden Schenkel wird die Schelle geschlossen und der in ihr befindliche Gegenstand derartig fixiert, dass er an einer Unterlage, wie beispielsweise einem Träger, einer Decke, einer Wand, einem Gehäuse oder dergleichen, befestigt werden kann. Die beiden Schenkel weisen übereinstimmende und im geschlossenen Zustand der Schelle deckungsgleiche Durchgangslöcher auf, durch die ein Halteelement, wie beispielsweise eine Schraube, geführt werden kann. Mit Hilfe dieses Halteelements wird die Schelle an der Unterlage fixiert.

Die Dokumente DE 92 14 700 U1, EP 2 280 206 A1 und DE 197 16 632 zeigen ebenfalls Schellen dieser Art.

Derartige Schellen haben sich in vielen Anwendungsbereichen bewährt. Sie müssen aus diesem Grunde in großen Stückzahlen bereitgestellt werden können. Man wird hier eine automatisierte Fertigung der Schelle anstreben. Um dies jedoch kosten- und zeiteffizient zu ermöglichen, wird man wiederum bestrebt sein, die Schelle aus möglichst wenigen Halbteilen zusammenzusetzen. Dies kann zu einer Reduzierung der Lagerkosten und des Logistikaufwandes für die verwendeten Halbteile beitragen. Auch möchte man die Herstellkosten für die Schelle reduzieren. Dies kann beispielsweise dadurch geschehen, dass man die Schelle auf einfache Weise konstruiert.

US 2 409 772 A zeigt eine verstellbare Kabelbaumschelle, die vor allem auf dem Gebiet der Luft- und Raumfahrttechnik eingesetzt wird. Diese technische Lehre bezieht sich auf Schellen, die dazu bestimmt sind, an einem Träger befestigt zu werden und Kabel oder Leitungen in den gewünschten Bereichen zu umgeben und zu halten. Ein Schellenband dieser Schelle ist an seinem ersten Ende umgeschlagen, wobei ein Endbereich im Wesentlich en senkrecht nach Außen weggebogen ist. In diesem Bereich sind Löcher eingebracht, in denen sich ein Haken deszweiten Endes des Schellenbandes einhaken lässt.

Der Erfindung liegt daher die Aufgabe zugrunde, eine einfach konstruierte Schelle kosteneffizient bereitzustellen.

Diese Aufgabe wird bei einer Schelle , insbesondere zum Befestigen von rohrförmigen Gegenständen an einer Unterlage, mit einem Schellenband mit einem ersten Umfangsende, das einen ersten Schenkel aufweist, und einem zweiten Umfangsende, das einen zweiten Schenkel aufweist, und mit mindestens einer Lasche, die auf mindestens einem der Schenkel angeordnet ist, wobei der erste und/oder zweite Schenkel und die auf diesem angeordnete Lasche einstückig ausgebildet sind, und wobei das Schellenband mindestens einen Vorsprung aufweist, der mit der mindestens einen Lasche zusammenwirkt, dadurch gelöst, dass die Lasche auf einer Seite des Schenkels angeordnet ist, die gegenüberliegend von dem jeweils anderen Schenkel angeordnet ist.

Man kann z.B. im Übergangsbereich zwischen dem jeweiligen Schenkel und der assoziierten Lasche Aussparungen vorsehen, so dass sich das Schellenband in einer Axialrichtung der Schelle verjüngt. Diese Aussparungen trennen dann sozusagen den entsprechenden Schenkel von der assoziierten Lasche und erleichtern ein Umbiegen. Die Lasche bildet somit ein Endstück des jeweiligen Umfangsendes des Schellenbandes. Um nun die Lasche auf dem entsprechenden Schenkel anzuordnen, wird man die Lasche im Bereich der Aussparungen derartig in Richtung des Schellenbandes umbiegen, dass sie in der gewünschten Position angeordnet werden kann. Die einstückige Ausbildung von Schenkel und assoziierter Lasche macht die störungsanfällige Zuführung eines weiteren Halbteils, sowie dessen Befestigung während des Fertigungsprozesses der Schelle überflüssig. Es lassen sich Kosten für weitere Halbteile einsparen und die Schelle ist auf eine einfache Weise konstruiert, was eine automatisierte Fertigung erleichtert.

Der mindestens eine Vorsprung ist in einem räumlich begrenzten Bereich des Schellenbandes angeordnet und ragt in einer Radialrichtung des Schellenbandes über dieses hinaus. Der Vorsprung kann einstückig mit dem Schellenband ausgebildet sein, beispielsweise durch Kaltumformung. Es ist jedoch ebenso möglich, den Vorsprung als ein eigenes Halbteil vorzusehen, das am Schellenband, beispielsweise durch Verschweißen, befestigt wird.

Auf mindestens einem der Schenkel ist eine Lasche auf einer dem jeweils anderen Schenkel gegenüberliegenden Seite angeordnet. Die Lasche wirkt mit jeweils einem Vorsprung zusammen. Der Vorsprung dient dazu, die Lasche in ihrer Position auf dem jeweiligen Schenkel derartig zu fixieren, dass hier weitere Befestigungsmittel für die Lasche entfallen können. Es kann also beispielsweise darauf verzichtet werden, die Lasche auf einem der Schenkel durch Vernieten oder Verschweißen zu befestigen. Die störanfällige Befestigung der Lasche auf einem der Schenkel kann entfallen. Die Serienfertigung der Schelle wird vereinfacht und kann somit kosteneffizient durchgeführt werden.

Vorzugsweise weist die mindestens eine Lasche jeweils einen umgebogenen Endabschnitt auf, der auf einer dem Schellenband zugewandten Seite der Lasche angeordnet ist. Der umgebogene Endabschnitt stellt dabei ein weiteres konstruktives Merkmal dar, das der einfachen Konstruktion der Schelle dient. Der umgebogene Endabschnitt kann durch einfache Verformung der jeweiligen Lasche ausgebildet werden; ein zusätzliches Halbteil ist nicht erforderlich. Auch ist der umgebogene Endabschnitt auf einer dem Schellenband zugewandten Seite der Lasche angeordnet, um mit diesem oder beispielsweise dem Vorsprung zusammenwirken zu können. Der umgebogene Endabschnitt setzt die Erstreckung der Lasche über den jeweiligen Schenkel hinaus fort. Er vermeidet eine Kerbwirkung der Lasche auf dem Schenkel durch Kräfte, die im Betriebszustand, also im gespannten Zustand der Schelle, auftreten könnten.

Hierbei ist bevorzugt, dass der jeweils eine umgebogene Endabschnitt in eine dem Schenkel, auf dem die den umgebogenen Endabschnitt aufweisende Lasche angeordnet ist, abgewandte Richtung weist und eine Ausnehmung aufweist. Der entsprechende umgebogene Endabschnitt setzt damit die Erstreckung der jeweiligen Lasche über den assoziierten Schenkel hinaus auf das Schellenband fort. Die Lasche ist auf dem ihr zugeordneten Schenkel angeordnet und mündet an einem ihrer Enden in den umgebogenen Endabschnitt. Dieser wiederum ist auf dem Schellenband angeordnet. Hierdurch ergibt sich eine höhere Steifigkeit des zweiten Umfangsendes der Schelle. Die Biegeradien der umgebogenen Endabschnitte und der Schenkel, auf denen diese angeordnet sind, sind dabei so gewählt, dass sich der umgebogene Endabschnitt an den zweiten Schenkel anschmiegt. Die Ausnehmung des umgebogenen Endabschnitts stellt ein weiteres konstruktives Merkmal dar, das dem Zusammenwirken der Lasche mit dem ihr zugeordneten Vorsprung des Schellenbandes dient.

Hierbei ist bevorzugt, dass die jeweilige Ausnehmung und der ihr assoziierte Vorsprung formschlüssig miteinander in Eingriff stehen. Die formschlüssige Verbindung der Ausnehmung des umgebogenen Endabschnitts der Lasche mit dem Vorsprung stellt dabei die einfachste konstruktive Möglichkeit dar, den Eingriff zwischen Ausnehmung und Vorsprung zu gewährleisten. Es kann ebenso vorgesehen sein, beispielsweise eine stoffschlüssige Verbindung zwischen Ausnehmung und Vorsprung, wie etwa durch Verschweißen, herzustellen. Der formschlüssige Eingriff der Ausnehmung des umgebogenen Endabschnitts der Lasche in den Vorsprung lässt die Lasche verdrehsicher in ihrer Position auf dem entsprechenden Schenkel der Schelle einrasten. Die Lasche ist also sicher in ihrer Position fixiert, ohne dass eine weitere Befestigung der Lasche am entsprechenden Schenkel, beispielsweise durch Verschweißen oder Vernieten, notwendig wäre. Zusätzlich zur Erhöhung der Steifigkeit durch den umgebogenen Endabschnitt ergibt sich durch den Eingriff der Ausnehmung mit dem Vorsprung eine Erhöhung der Biegesteifigkeit des jeweiligen Umfangsendes. Die auf die Lasche einwirkenden Biegemomente, beispielsweise hervorgerufen durch Bewegung und Verdrehung des mit der Schelle gehaltenen rohrförmigen Gegenstandes, führen so nicht zu Versatz und Lösen der Lasche aus ihrer Position auf dem jeweiligen Schenkel. Die konstruktiv einfache Ausgestaltung der Schelle ermöglicht ihre automatisierte Fertigung auf einfache Weise. Ebenso kann die Fertigung auf kosten- und zeiteffiziente Weise erfolgen.

Vorzugsweise umfasst eine Erstreckung der Ausnehmung in einer Umfangsrichtung des Schellenbandes mindestens die Hälfte einer Erstreckung des Vorsprungs in dieser Richtung. Hierdurch ist sichergestellt, dass die jeweilige Ausnehmung auf zuverlässige Weise formschlüssig mit dem Vorsprung in Eingriff stehen kann. Es wird gewährleistet, dass die Lasche tatsächlich über den Vorsprung verdrehsicher im Schellenband einrastet. Bei Beaufschlagung der Lasche mit in Axialrichtung der Schelle wirkenden Kräften wird ein "Herausrutschen" des umgebogenen Endabschnitts unter dem Vorsprung verhindert. Die Lasche ist gegen ein Verdrehen aus ihrer Position durch auf sie einwirkende Biegemomente gesichert.

Vorzugsweise weist der Vorsprung in einer Axialrichtung des Schellenbandes eine größere Erstreckung auf als in der Umfangsrichtung des Schellenbandes. Dies trägt weiterhin dazu bei, die Position der Lasche auf dem ihr assoziierten Schenkel gegen auf die Lasche einwirkende axiale Kräfte zu sichern. Die die Lasche beaufschlagenden Kräfte können über den formschlüssigen Eingriff der Ausnehmung mit dem Vorsprung auf diesen abgeleitet werden. Der Vorsprung weist dabei eine hinreichend große axiale Erstreckung auf, um eine Verformung desselben durch Einwirkung des mit axialen Kräften beaufschlagten umgebogenen Endabschnitts weitgehend zu verhindern. Damit wird ein Verrutschen der Lasche gegenüber dem Schenkel, auf dem sie angeordnet ist, durch Verformung des Vorsprungs verhindert.

Es ist bevorzugt, dass eine radiale Erstreckung des Vorsprungs auf eine radiale Erstreckung des jeweiligen umgebogenen Endabschnitts abgestimmt ist. Die radiale Erstreckung des Vorsprungs und die radiale Erstreckung des umgebogenen Endabschnitts werden dabei vorzugsweise gleich groß gewählt werden. Hierdurch lässt sich ein optimaler Formschluss zwischen der Ausnehmung und dem Vorsprung gewährleisten. Ein Außer-Eingriff-Kommen der Ausnehmung mit dem Vorsprung durch auf die Lasche einwirkende Kräfte kann somit verhindert werden. Ebenso kann jedoch vorgesehen sein, dass die radiale Erstreckung des Vorsprungs kleiner als die radiale Erstreckung des umgebogenen Endabschnitts ist; auch ist möglich, die radiale Erstreckung des Vorsprungs größer als die radiale Erstreckung des umgebogenen Endabschnitts auszugestalten.

Vorzugsweise weist der Vorsprung eine erste und eine zweite Flanke in Umfangsrichtung des Schellenbandes auf, wobei die erste Flanke in einem spitzeren Winkel als die zweite Flanke in das Schellenband einmündet. Die erste Flanke wird dabei in einer von der Lasche abgewandten Richtung zum Schellenband hin abfallen. Die zweite Flanke fällt in einer auf die Lasche weisenden Richtung zum Schellenband hin ab. Durch den spitzeren Winkel, unter dem die erste Flanke in das Schellenband einmündet, ist es auf einfache Weise möglich, die Lasche in ihre endgültige Position auf dem ihr zugeordneten Schenkel umzuklappen. Bei diesem Umklappen kann dann der umgebogene Endabschnitt auf der ersten Flanke in Richtung des jeweiligen Schenkels "herabgleiten", bis er den (in Radialrichtung der Schelle gesehen) höchsten Punkt des Vorsprungs überwunden hat. Die Lasche wird sodann in ihrer endgültigen Position auf dem entsprechenden Schenkel zu liegen kommen, so dass die Ausnehmung des umgebogenen Endabschnitts mit der zweiten Flanke des Vorsprungs, sowie den axialen Enden des Vorsprungs in formschlüssigen Eingriff kommt.

Hierbei ist bevorzugt, dass die zweite Flanke einen rechten Winkel relativ zum Schellenband aufweist. Sobald die Lasche in ihrer Position auf dem ihr assoziierten Schenkel angeordnet ist, wird hierdurch ein erneutes "Herausrutschen" und damit ein Außer-Eingriff-Kommen der Ausnehmung des umgebogenen Endabschnitts mit der zweiten Flanke des Vorsprungs verhindert. Die Lasche kann nicht, wie noch bei der ersten Flanke mit ihrem spitzeren Winkel zum Schellenband, entlang der zweiten Flanke in Richtung auf den höchsten Punkt des Vorsprungs zurück gleiten. Die Lasche rastet also gleichsam in ihrer Position auf dem ihr zugeordneten Schenkel ein; ein "Abheben" der Lasche vom entsprechenden Schenkel wird verhindert.

Vorzugsweise weisen der erste und/oder zweite Schenkel und die auf diesem angeordnete Lasche mindestens eine Versteifungssicke im Bereich ihres umgebogenen Endabschnitts auf. Die Versteifungssicke bringt dabei eine Erhöhung der Biegesteifigkeit des jeweiligen umgebogenen Endabschnitts bzw. der entsprechenden Lasche gegenüber im Betrieb entstehenden Belastungen mit sich.

Dabei ist bevorzugt, dass der erste und/oder zweite Schenkel und die auf diesem angeordnete Lasche mindestens eine Versteifungssicke auf jeder Seite der Ausnehmung ihres umgebogenen Endabschnitts aufweisen. Es ergibt sich eine weitere Aussteifung, die den zuverlässigen Halt der Lasche in ihrer Position auf dem entsprechenden Schenkel gegen in Axialrichtung auf die Lasche einwirkende Kräfte gewährleisten kann.

Es ist auch bevorzugt, dass die Lasche lediglich auf einer dem ersten Schenkel abgewandten Seite des zweiten Schenkels angeordnet und der erste Schenkel durch eine Abkröpfung aus dem Schellenband gebildet ist, die mindestens eine Versteifungssicke aufweist. Durch die einstückige Ausbildung der Lasche mit dem zweiten Schenkel der Schelle lässt sich somit die gesamte Schelle aus lediglich einem Bauteil herstellen. Durch diese denkbar einfache konstruktive Ausgestaltung der Schelle entfällt die Zuführung und Verarbeitung separater Halbteile im Fertigungsprozess der Schelle. Eine automatisierte Fertigung der Schelle ist auf einfache Weise möglich. Es wird eine Reduzierung der Herstellkosten, der Lagerkosten und des Logistikaufwandes bei der Fertigung der Schelle erreicht. Ebenso entfällt die fehleranfällige Verbindung separater Halbteile, was ebenso eine erhöhte Lebensdauer der Schelle mit sich bringt. Die Herstellung der Schelle kann insgesamt kosten- und zeiteffizienter durchgeführt werden.

Schließlich ist bevorzugt, dass der erste Schenkel im geöffneten Zustand der Schelle mindestens ein in Richtung auf den zweiten Schenkel herausstehendes Befestigungselement und der zweite Schenkel einen Befestigungsabschnitt aufweist, der in eine Lücke zwischen dem Befestigungselement und einem dem Befestigungselement gegenüberliegenden Nachbarbereich des ersten Schenkels einführbar ist und dass im geschlossenen Zustand der Schelle das mindestens eine Befestigungselement plastisch auf die vom ersten Schenkel abgewandte Seite des Befestigungsabschnitts umgeformt ist. Hierdurch wird eine Vorfixierungsvorrichtung für die Schelle bereitgestellt. Es wird eine größere Sicherheit gegen ein versehentliches Lösen der Vorfixierung erreicht. Unter dem "geöffneten Zustand" der Schelle ist zu verstehen, dass die Schelle noch nicht auf dem rohrförmigen Gegenstand vorfixiert ist und die beiden Schenkel also noch einen Abstand zueinander aufweisen. Der "geschlossene Zustand" der Schelle hingegen bezeichnet einen Zustand, in dem die beiden Schenkel aneinander fixiert sind, so dass der vom Schellenband umschlossene Aufnahmeraum so an den rohrförmigen Gegenstand angepasst ist, dass das Schellenband mit einer gewissen Vorspannung am Gegenstand anliegt. Durch die plastische Umformung der Befestigungselemente auf den Befestigungsabschnitt können diese nicht durch eine federnde Bewegung wieder gelöst werden. Ein versehentliches Lösen der Vorfixierung der Schelle kann vermieden werden. Auch wird der Befestigungsabschnitt durch eine Lücke zwischen dem Befestigungselement und dem Nachbarbereich geführt, wenn die Schelle in einem geschlossenen Zustand ist. Hierdurch wird ein seitliches Ausweichen des Befestigungsabschnitts verhindert; auf der einen Seite wird eine Bewegung durch das Befestigungselement, auf der anderen Seite durch den Nachbarbereich verhindert. Die Beweglichkeit der beiden Schenkel relativ zueinander wird damit soweit unterbunden, dass ein versehentliches Lösen der Vorfixierung der Schelle verhindert werden kann. Der Monteur der Schelle kann diese nun mit entsprechenden Halteelementen an der Unterlage befestigen, ohne ein Außer-Eingriff-Kommen der Schelle mit dem rohrförmigen Gegenstand durch beispielsweise bei der Montage auftretende Belastungen besorgen zu müssen.

Die Erfindung wird im Folgenden anhand von bevorzugten Ausführungsbeispielen in Verbindung mit den Zeichnungen beschrieben.
Hierin zeigen:
- Fig. 1: eine perspektivische Ansicht eines ersten Ausführungsbeispiels einer Schelle in einem geschlossenen Zustand,
- Fig. 2: eine Schelle nach dem ersten Ausführungsbeispiel in einem geschlossenen Zustand in einer Frontalansicht;
- Fig. 3: eine aufgebogene Schelle nach dem ersten Ausführungsbeispiel in einem Zwischenschritt der Fertigung,
- Fig. 4: eine teilweise aufgebogene Schelle nach dem ersten Ausführungsbeispiel in einem weiteren Zwischenschritt der Fertigung,
- Fig. 5: eine Draufsicht eines Schellenbandes nach dem ersten Ausführungsbeispiel der Schelle,
- Fig. 6: eine Ansicht eines zweiten Umfangendes einer Schelle nach dem ersten Ausführungsbeispiel der Schelle,
- Fig. 7: eine Detailansicht eines ersten Umfangendes sowie eine Frontalansicht eines zweiten Umfangendes einer Schelle nach dem ersten Ausführungsbeispiel der Schelle,
- Fig. 8: einen Schnitt X-X nach Fig. 9 einer Draufsicht eines Vorsprungs und eines umgebogenen Endabschnitts,
- Fig. 9: einen Schnitt XI-XI des Vorsprungs nach Fig. 8,
- Fig. 10A-F: verschiedene bevorzugte Querschnitte des Schellenbandes
- Fig. 11: eine Ansicht der Umfangsenden einer Schelle nach einem zweiten Ausführungsbeispiel der Schelle,
- Fig. 12: eine Ansicht der Umfangsenden einer Schelle mit einer Vorfixierungsvorrichtung nach einem dritten Ausführungsbeispiel der Schelle,
- Fig. 13: eine Ansicht eines ersten Ausführungsbeispiels einer Vorfixierungsvorrichtung im geöffneten und geschlossenen Zustand der Schelle mit einem schnitt A-A,
- Fig. 14: eine Draufsicht des ersten Ausführungsbeispiels einer Vorfixierungsvorrichtung,
- Fig. 15: eine Draufsicht eines Schellenbandes mit konstruktiven Merkmalen der Vorfixierungsvorrichtung nach ihrem ersten Ausführungsbeispiel,
- Fig. 16: eine Draufsicht eines Schellenbandes mit konstruktiven Merkmalen der Vorfixierungsvorrichtung nach ihrem zweiten Ausführungsbeispiel.

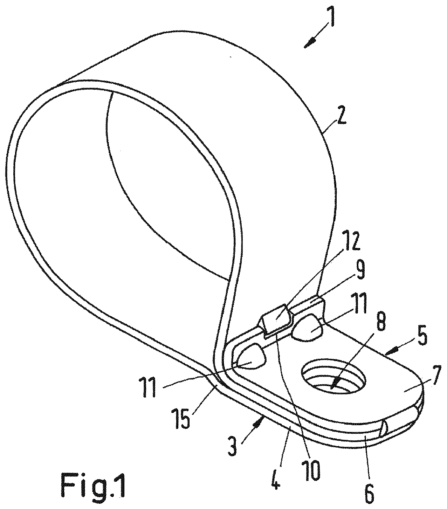

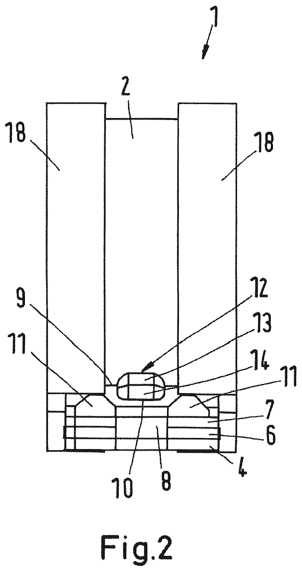

Die Fig. 1 und 2 zeigen eine Schelle 1 nach einem ersten Ausführungsbeispiel mit einem Schellenband 2. Das Schellenband 2 weist ein erstes Umfangsende 3 mit einem ersten endseitigen Schenkel 4 auf. Ein zweites Umfangsende 5 des Schellenbandes 2 weist einen zweiten Schenkel 6 sowie eine Lasche 7 auf. Die Lasche 7 ist auf einer dem ersten Schenkel 4 abgewandten Seite des zweiten Schenkels 6 angeordnet. Der erste Schenkel 4, der zweite Schenkel 6, sowie die Lasche 7 weisen je eine Durchgangsöffnung 8 auf. Auf einer dem Schellenband 2 zugewandten Seite weist die Lasche 7 einen umgebogenen Endabschnitt 9 auf. Der umgebogene Endabschnitt 9 weist in seiner axialen Mitte eine Ausnehmung 10 auf, die beidseitig von Versteifungssicken 11 umgeben ist. Die Ausnehmung 10 steht im zusammengebauten Zustand der Schelle mit einem Vorsprung 12 in Eingriff, der eine erste Flanke 13 und eine zweite Flanke 14 aufweist. Der Vorsprung 12 ist auf dem Schellenband 2 angeordnet. Wenn die Lasche 7 auf den zweiten Schenkel 6 umgebogen wird, rastet der Vorsprung 12 hörbar in der Ausnehmung 10 ein. Dadurch ist die Lasche 7 verdrehsicher auf dem zweiten Schenkel 6 gehalten. Sie ist auch gegen ein Abheben vom zweiten Schenkel 6 geschützt. Durch den umgebogenen Endabschnitt 9 ergeben sich auch keine scharfen Kanten, die bei einer Beaufschlagung mit einer Kraft senkrecht zum zweiten Schenkel 6 zu einer Kerbwirkung führen könnten. Der erste Schenkel 4 ist durch eine Abkröpfung 15 aus dem Schellenband 2 gebildet. Der erste Schenkel 4 weist dabei im Bereich der Abkröpfung 15 mindestens eine Versteifungssicke 16 auf. Diese Versteifungssicke 16 wird durch einen Übergangsbereich 17 gebildet. Schließlich kann es vorgesehen sein, die Schelle 1 mit einem Mantel 18 auszubilden, der aus einem elastomeren Material, beispielsweise EPDM, Silikon, TPE, NBR oder CR, gebildet sein kann.

Die Fig. 1 zeigt die Schelle 1 mit einem C-förmig gebogenen Schellenband 2. Das C-förmig gebogene Schellenband 2 umschließt dabei einen Aufnahmeraum derartig, dass in einem geschlossenen oder nahezu geschlossenen Zustand der Schelle 1 ein rohr- oder schlauchförmiger Gegenstand festgehalten werden kann.

Wenn die Schelle 1 geöffnet ist, lässt sie sich über einen (nicht dargestellten) rohrförmigen Gegenstand aufschieben. Durch Zusammendrücken und Aufeinander-zu-Bewegen der beiden Umfangsenden 3, 5 wird dann die Schelle 1 geschlossen und in ihrer Position auf dem Gegenstand fixiert.

Im Ausführungsbeispiel der Fig. 1 wird der erste Schenkel 4 dabei durch eine Abkröpfung 15 aus dem Schellenband 2 gebildet und erstreckt sich nahezu geradlinig vom Schellenband 2 aus. Die Abkröpfung 15 dient als Abstandshalter zwischen Schellenband 2 und einer (nicht dargestellten) Unterlage, an der die Schelle 1 befestigt werden soll, um Raum für den (in Fig. 1 nicht dargestellten) Mantel 18 zu schaffen. Die Abkröpfung 15 kann jedoch, beispielsweise bei Schellen 1 ohne Mantel 18 oder wenn die Einbausituation es erfordert, auch entfallen. Der zweite Schenkel 6, sowie die 10 auf diesem angeordnete Lasche 7 sind gegenüber dem Schellenband 2 etwa rechtwinklig abgebogen.

Der erste Schenkel 4, der zweite Schenkel 6, sowie die Lasche 7 weisen dabei jeweils eine Durchgangsöffnung 8 auf. In einem geschlossenen Zustand der Schelle 1 überdecken sich die drei Durchgangsöffnungen 8 jeweils. Die Durchgangsöffnungen 8 können dabei beispielsweise mit einer Kreisform, einer Kreisringform oder auch einem polygonartigen Umfangsrand versehen sein. Ebenso ist es möglich eine oder mehrere der Durchgangsöffnungen 8 als Langloch auszubilden. Die Durchgangsöffnungen 8 dienen dazu, Halteelemente aufzunehmen, die dazu verwendet werden, die Schelle 1 an einer Unterlage zu befestigen. Derartige Halteelemente können beispielsweise durch Schrauben oder Niete bereitgestellt werden. Diese werden dann in der Durchgangsöffnung 8 aufgenommen und stehen zugleich mit der Unterlage derartig in Eingriff, dass die Schelle 1 zuverlässig an dieser befestigt wird.

Fig. 2 zeigt die Schelle 1 in einem geschlossenen Zustand in einer Frontalansicht mit einem Mantel 18 bekleidet.

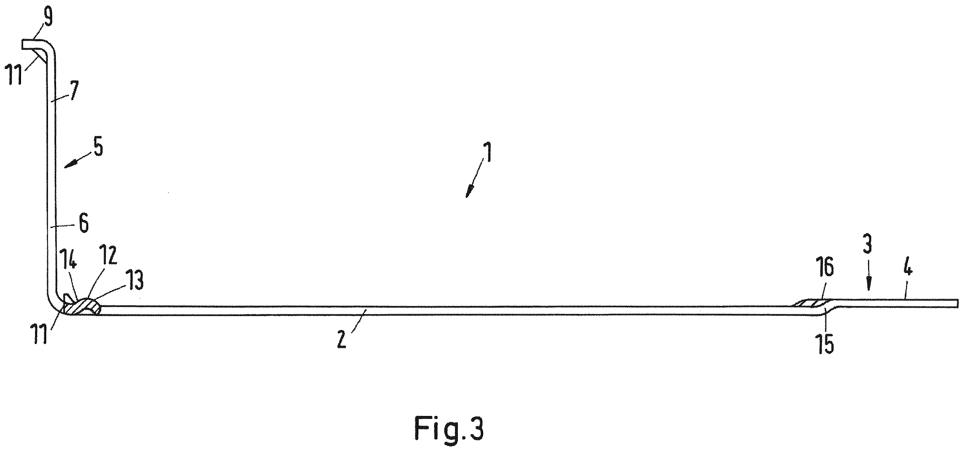

Die Fig. 3 bis 7 zeigen Ansichten der Schelle 1 während deren Fertigungsprozess, sowie Detailansichten einiger ihrer konstruktiven Merkmale.

In Fig. 3 ist die Schelle 1 in einem aufgebogenen Zustand dargestellt. Das Schellenband 2 ist dabei noch nicht in die vorgesehene C-Form gebogen. Auch ist die Lasche 7 noch nicht in ihrer Position auf dem zweiten Schenkel 6 angeordnet. Der rechte Teil der Fig. 3 zeigt, dass am ersten Umfangsende 3 des Schellenbandes 2 der erste Schenkel 4 durch eine Abkröpfung 15 aus dem Schellenband 2 gebildet ist. Im Bereich der Abkröpfung 15 ist die Versteifungssicke 16 ausgebildet. Der erste Schenkel 4 erstreckt sich dabei nahezu geradlinig vom Schellenband 2. Auf dem dem ersten Umfangsende 3 gegenüberliegenden Abschnitt des Schellenbandes 2, also im linken Teil der Fig. 3, ist ein Teil des Schellenbands 2 zur ersten Flanke 13 ausgebildet. Die erste Flanke 13 bildet einen Teil des Vorsprungs 12. Der Vorsprung 12 weist die zweite Flanke 14 auf, die wieder in das Schellenband 2 einmündet. Im Bereich dieser Einmündung der zweiten Flanke 14 in das Schellenband 2 ist die Versteifungssicke 11 vorgesehen. Am zweiten Umfangsende 5 des Schellenbandes 2 ist der zweite Schenkel 6 in etwa rechtwinklig vom Schellenband 2 abgebogen.

Der zweite Schenkel 6 ist dabei einstückig mit der Lasche 7 ausgebildet. Die Lasche 7 weist an ihrem dem zweiten Schenkel 6 gegenüberliegenden Ende den umgebogenen Endabschnitt 9 auf. Der umgebogene Endabschnitt 9 ist etwa rechtwinklig von der Lasche 7 abgebogen. Im Bereich dieser Umbiegung sind Versteifungssicken 11 vorgesehen.

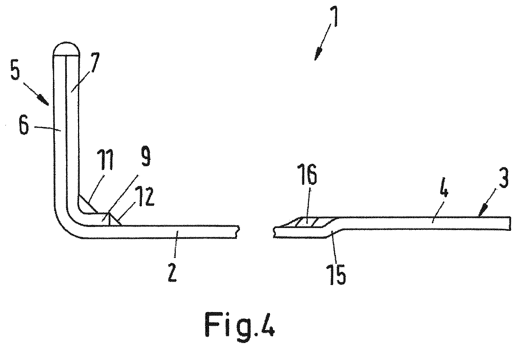

Fig. 4 zeigt die Schelle 1 der Fig. 3, nachdem die Lasche 7 in ihre Position auf dem zweiten Schenkel 6 umgebogen wurde.

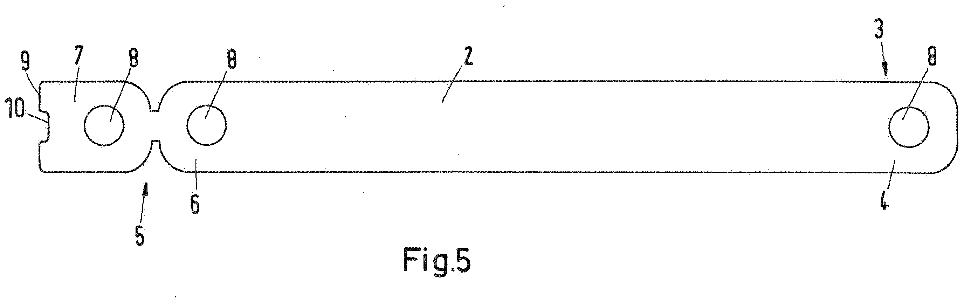

Wie insbesondere aus Fig. 5 zu ersehen ist, ist der zweite Schenkel 6 einstückig mit der Lasche 7 ausgebildet. Der zweite Schenkel 6 weist an seinem der Lasche 7 benachbarten Ende Aussparungen auf, so dass sich das Material des Schellenbandes 2 beim Übergang vom zweiten Schenkel 6 zur Lasche 7 hin verjüngt. Im Bereich dieser Aussparungen kann die Lasche 7 umgebogen und in der für sie vorgesehenen Position auf der dem ersten Schenkel 4 abgewandten Seite des zweiten Schenkels 6 angeordnet werden.

Die Anordnung der Lasche 7 auf dem zweiten Schenkel 6 erhöht dabei die Biegesteifigkeit des zweiten Umfangsendes 5 der Schelle 1. Die einstückige Ausbildung der Lasche 7 mit dem zweiten Schenkel 6 macht das Bereitstellen eines zweiten Halbteils für die Lasche 7 überflüssig. Es ist deswegen auf kosten- und zeiteffiziente Weise möglich, das Schellenband 2, wie es in Fig. 5 dargestellt ist, in einem Arbeitsschritt, beispielsweise einem Stanzvorgang, zu erzeugen.

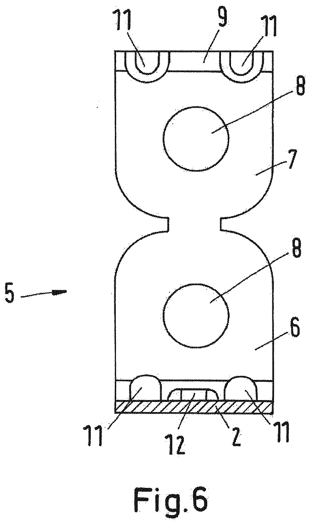

Sowohl auf dem zweiten Schenkel 6, wie auch auf der Lasche 7 können Versteifungssicken 11 vorgesehen sein. Diese können beidseitig des Vorsprungs 12, bzw. beidseitig der Ausnehmung 10 des umgebogenen Endabschnitts 9 angeordnet sein. Dies ist beispielhaft in Fig. 6 für einen Zustand der Schelle 1 gezeigt, in dem diese noch nicht endgültig zusammengebaut dargestellt ist. Die Lasche 7 ist noch nicht in ihrer endgültigen Position auf dem zweiten Schenkel 6 dargestellt.

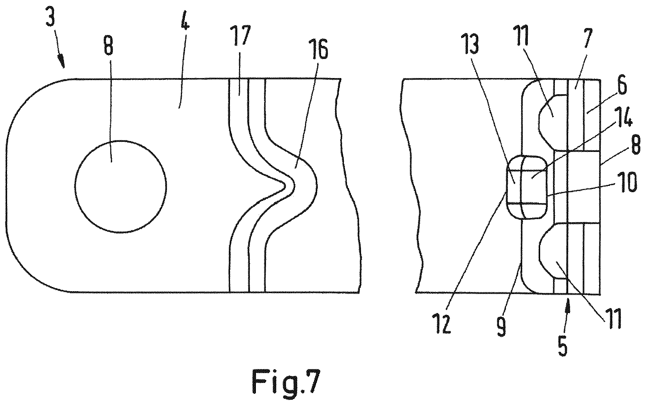

Der erste Schenkel 4, der annähernd tangential zum Schellenband 2 angeordnet ist, ist durch die Abkröpfung 15 gegenüber der reinen Tangentenrichtung etwas nach außen versetzt. Dieser Versatz der Abkröpfung 15 wird durch den Übergangsbereich 17 ausgebildet. Der Übergangsbereich 17 ist dabei nicht gleichförmig über die Breite des Schellenbandes 2, bzw. des ersten Schenkels 4, ausgebildet, sondern er verläuft in einer in Fig. 7 dargestellten Draufsicht V-förmig. Durch diesen Verlauf ist die Versteifungssicke 16 gebildet, die zu einer Aussteifung des Übergangsbereichs 17 und damit der Abkröpfung 15 beiträgt.

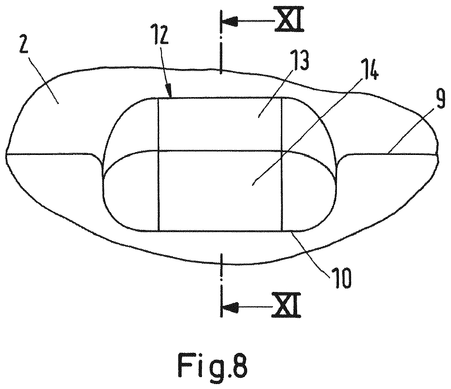

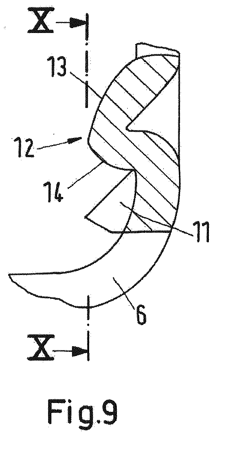

In Fig. 7 ist ebenso dargestellt, dass die Lasche 7 über den umgebogenen Endabschnitt 9 mittels der Ausnehmung 10 mit dem Vorsprung 12 in Eingriff steht. Dieser Eingriff sowie weitere konstruktive Merkmale des Vorsprungs 12 sind in den Fig. 8 und 9 dargestellt.

Fig. 8 zeigt dabei eine vergrößerte Ansicht des Eingriffs des umgebogenen Endabschnitts 9 mit dem Vorsprung 12. Die Ausnehmung 10 des umgebogenen Endabschnitts 9 umschließt dabei den Vorsprung 12 formschlüssig. Im dargestellten Ausführungsbeispiel ist dabei ebenso zu erkennen, dass die Erstreckung der Ausnehmung 10 in einer Umfangsrichtung des Schellenbandes 2 in etwa die Hälfte einer Erstreckung des Vorsprungs 12 in dieser Richtung umfasst. Hierdurch wird gewährleistet, dass ein Außer-Eingriff-Kommen der Ausnehmung 10 mit dem Vorsprung 12 durch die Lasche 7 in Axialrichtung des Schellenbandes 2 beaufschlagende Kräfte vermieden wird. Der in Umfangsrichtung des Schellenbandes 2 verlaufende Abschnitt der Ausnehmung 10, der an einer axialen Stirnseite des Vorsprungs 12 anliegt, und in Umfangsrichtung mit einer Erstreckung über die Hälfte der Erstreckung des Vorsprungs 12 ausgebildet ist, kann somit bei axial auf die Lasche 7 einwirkenden Kräften nicht in einer Umfangsrichtung auf die Lasche 7 zu unter dem Vorsprung 12 "herausrutschen".

Ebenso ist in Fig. 8 zu erkennen, dass der Vorsprung 12 in einer Axialrichtung des Schellenbandes 2 eine größere Erstreckung aufweist als in der Umfangsrichtung des Schellenbandes 2. Der Eingriff der Ausnehmung 10 mit dem Vorsprung 12 am Schellenband 2 dient dazu, die Lasche 7 in ihrer Position auf dem zweiten Schenkel 6 verdrehsicher einzurasten. Es muss also vor allem eine Sicherung gegen axial auf die Lasche 7 einwirkende Kräfte bereitgestellt werden. Der Vorsprung 12 muss in Axialrichtung des Schellenbandes 2 wirkende Kräfte zuverlässig aufnehmen können. Aus diesem Grunde ist es zweckmäßig, dem Vorsprung 12 in einer Axialrichtung des Schellenbandes 2 eine größere Erstreckung zu geben als in der Umfangsrichtung des Schellenbandes 2.

Der Vorsprung 12 kann dabei einstückig mit dem Schellenband 2 ausgebildet werden. Dies kann beispielsweise im Wege der Kaltumformung des Schellenbandes 2 geschehen. Hierdurch werden die erste Flanke 13 und die zweite Flanke 14 des Vorsprungs 12 gebildet. Dabei mündet die erste Flanke 13 in einem spitzeren Winkel als die zweite Flanke 14 in das Schellenband 2 ein.

Im Ausführungsbeispiel der Fig. 9 weist die zweite Flanke 14 auch einen rechten Winkel relativ zum Schellenband 2 auf. Während des Fertigungsprozesses der Schelle 1 kann dann die Lasche 7 wie folgt in ihre endgültige Position auf dem zweiten Schenkel 6 gebracht werden. Man biegt die Lasche 7 im Bereich der Aussparungen zwischen der Lasche 7 und dem zweiten Schenkel 6 in Richtung des Schellenbandes um, bis das der Ausnehmung 10 gegenüberliegende Ende des umgebogenen Endabschnitts 9 mit der ersten Flanke 13 zur Anlage kommt. Sodann beaufschlagt man die Lasche 7 mit einer Kraft in Richtung des zweiten Schenkels 6, so dass der umgebogene Endabschnitt 9 auf der ersten Flanke 13 in Richtung des zweiten Schenkels 6 herabgleitet, bis er den in Radialrichtung höchsten Punkt des Vorsprungs 12 überwunden hat, und die Ausnehmung 10 in einer Position unterhalb der zweiten Flanke (also in Richtung des zweiten Schenkels 6) angeordnet ist. Die Ausbildung eines rechten Winkels an der zweiten Flanke 14 relativ zum Schellenband 2 gewährleistet dabei, dass ein Außer-Eingriff-Kommen der Ausnehmung 10 mit dem Vorsprung 12 durch Einwirken von Kräften in Umfangsrichtung des Schellenbandes 2 auf die Lasche 7 verhindert werden kann.

Beidseitig des Vorsprungs 12 können Versteifungssicken 11 vorgesehen sein, die sowohl auf dem zweiten Schenkel 6 als auch der Lasche 7 ausgebildet sind. Dies ist beispielsweise aus den Fig. 1 und 2 ersichtlich. Die Ausbildung der Versteifungssicken 11 beidseitig des Vorsprungs 12 bedingt dabei eine weitere Versteifung der Lasche 7 in ihrer Position und damit ein verdrehsicheres Einrasten der Lasche 7 auf dem zweiten Schenkel 6.

Für das Schellenband 2 kommen unter anderem folgende Werkstoffe in Betracht: verzinkter Stahl, Chromstahl, Chromnickelstahl, Kupfer, Messing, Aluminium- und Magnesiumlegierungen, sowie Faserverbundwerkstoffe. Die Fertigung der Schelle 1 aus Aluminiumlegierungen ist möglich, weil man die Schelle 1 einstückig, beispielsweise durch Stanzen, herstellen kann. Die Zufuhr und Befestigung separater Halbteile aus Aluminium hingegen ist sehr problematisch, da es zur Entstehung von Abrieb in einem automatischen Fertigungsprozess kommt; auf eben diese Verwendung separater Halbteile kann jedoch nach der erfindungsgemäßen Fertigung der Schelle 1 verzichtet werden.

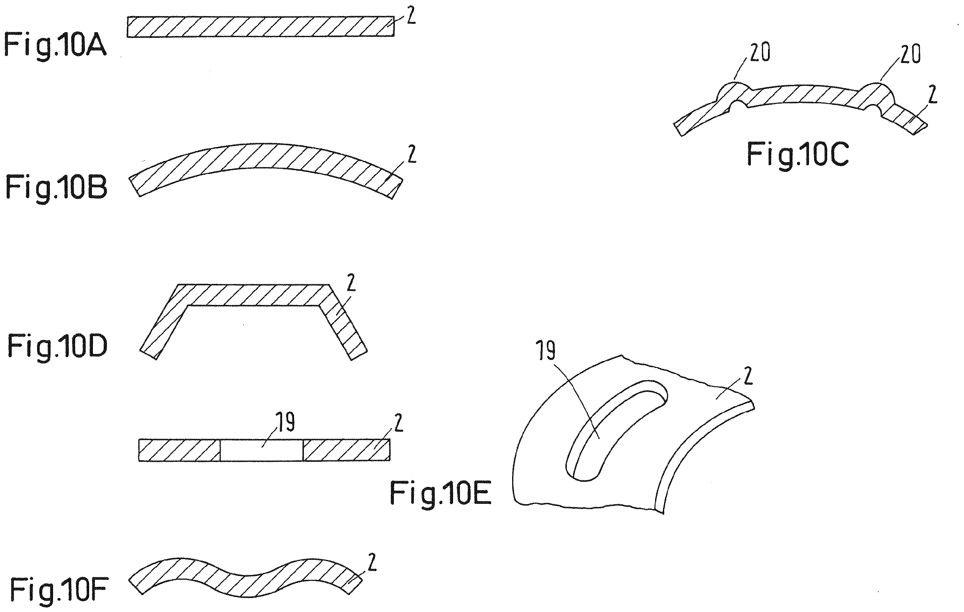

Die Fig. 10A-F zeigen verschiedene Ausführungsformen, die für den Querschnitt des Schellenbandes 2 vorgesehen sein können. Die Fig. 10A zeigt dabei einen geradlinigen Querschnitt des Schellenbandes 2; Fig. 10B zeigt ein Schellenband 2 im Querschnitt mit einer Krümmung und einem einheitlichen assoziierten Krümmungsradius; Fig. 10C zeigt ein Schellenband 2 im Querschnitt mit einem einheitlichen ersten Krümmungsradius und auf dem Schellenband 2 zwei Erhöhungen 20, die unter einem zweiten Krümmungsradius ausgebildet sind, der vom ersten einheitlichen Krümmungsradius des Schellenbandes 2 abweicht. Fig. 10D stellt einen Querschnitt des Schellenbandes 2 dar, bei dem die beiden axialen Enden des Schellenbandes 2 unter einem gemeinsamen, bestimmten Winkel aufeinander zu umgebogen sind. Im linken Teil der Fig. 10E ist ein geradlinig ausgebildeter Querschnitt des Schellenband 2 gezeigt, wobei das Schellenband 2 in diesem Fall eine Aussparung 19 aufweist; diese Aussparung 19 ist auf einen räumlich begrenzten Bereich des Schellenbandes 2 beschränkt, wie dies aus der perspektivischen Darstellung des Schellenbandes 2 in der rechten Hälfte der Fig. 10E hervorgeht. Schließlich kann auch vorgesehen sein, das Schellenband 2 mit einem wellenförmigen Querschnitt auszubilden. Dabei können die die Wellenform charakterisierenden Krümmungsradien des Schellenbandes 2 identisch oder verschieden sein. Ein derartiger Querschnitt des Schellenbandes 2 ist in Fig.10F dargestellt.

Im Rahmen der vorliegenden Erfindung können weiterhin vom bisher beschriebenen Ausführungsbeispiel der Schelle 1 abweichende andere Ausführungsformen vorgesehen sein.

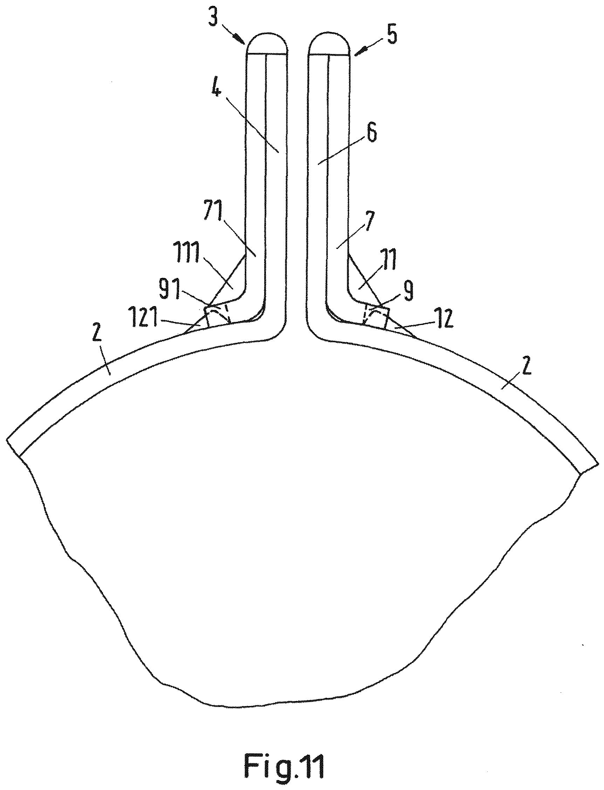

In Fig. 11 ist ein zweites Ausführungsbeispiel einer Schelle 1 dargestellt. Diejenigen konstruktiven Merkmale der Schelle 1, die mit denjenigen des ersten Ausführungsbeispiels übereinstimmen, sind mit identischen Bezugszeichen versehen. Auch gilt das über diese Merkmale bisher gesagte entsprechend für das im Folgenden beschriebene zweite Ausführungsbeispiel.

Im Ausführungsbeispiel der Fig. 11 ist zusätzlich zur auf dem zweiten Schenkel 6 angeordneten Lasche 7 auch auf dem ersten Schenkel 4 eine Lasche 71 vorgesehen. Die Abkröpfung 15 am ersten Schenkel 4 des ersten Ausführungsbeispiels entfällt hier entsprechend und der erste Schenkel 4 ist ebenso wie der zweite Schenkel 6 annähernd rechtwinklig vom Schellenband 2 abgebogen. Die Anbringung der Lasche 71 auf dem ersten Schenkel 4 geschieht dabei auf die gleiche Weise, wie dies bei der Anbringung der Lasche 7 auf dem zweiten Schenkel 6 der Fall ist. Auch weist die Lasche 71 einen umgebogenen Endabschnitt 91 auf, der durch eine Versteifungssicke 111 in seiner Steifigkeit verstärkt ist. Ebenso wie die Lasche 7 über eine Ausnehmung 10 mit dem Vorsprung 12 auf dem Schellenband 2 in Eingriff steht, ist die Lasche 71 über eine entsprechende (nicht dargestellte) Ausnehmung ihres umgebogenen Endabschnitts 91 mit einem entsprechenden Vorsprung 121 auf dem Schellenband 2 in Eingriff gebracht. Sowohl konstruktive als auch funktionale Merkmale der Lasche 7, die auf dem zweiten Schenkel 6 angeordnet ist, finden sich also entsprechend auch für die Lasche 71, die auf dem ersten Schenkel 4 angeordnet ist.

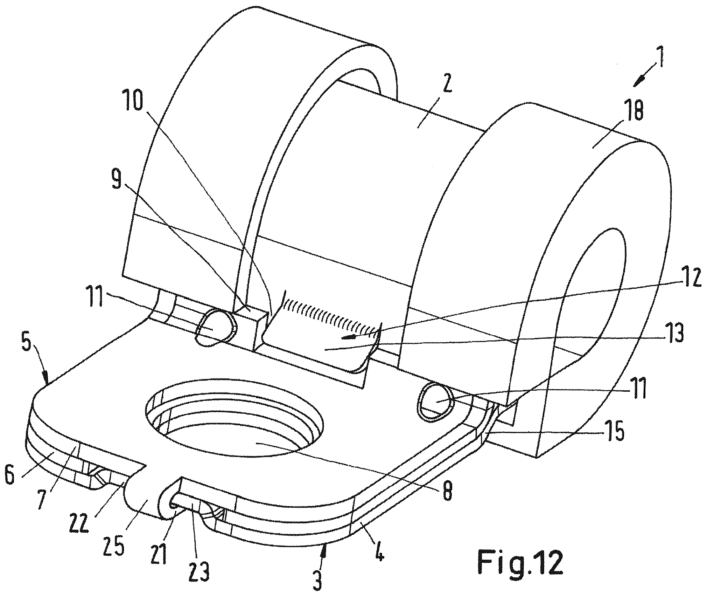

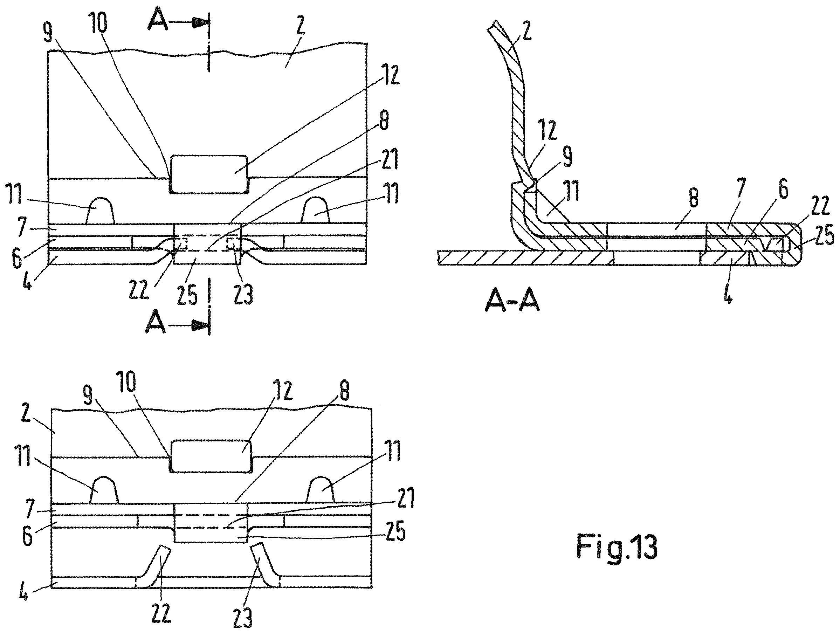

Ein drittes Ausführungsbeispiel der erfindungsgemäßen Schelle 1 ist in Fig. 12 dargestellt. Wiederum sind identische Merkmale mit identischen Bezugszeichen versehen. Nach dem dritten Ausführungsbeispiel ist eine Schelle 1 mit einer Vorfixierungsvorrichtung angegeben. Wie aus Fig. 12 zu ersehen ist, ist die Schelle 1 bis auf die Vorfixierungsvorrichtung identisch mit der Schelle 1 des ersten Ausführungsbeispiels. Die konstruktive Ausgestaltung der Vorfixierungsvorrichtung wird im Folgenden anhand der Fig. 13 bis 16 näher beschrieben.

Fig. 13 zeigt eine Ansicht der Vorfixierungsvorrichtung in einem geöffneten und einem geschlossenen Zustand der Schelle 1. Es ist ebenso ein Schnitt A-A dargestellt. Im Endabschnitt des zweiten Schenkels 6 ist ein Befestigungsbereich 21 angeordnet. Im Endabschnitt des ersten Schenkels 4 stehen dabei in Richtung auf den zweiten Schenkel 6 ein erstes und ein zweites Befestigungselement 22, 23 hervor. Hierdurch ist es möglich, die Befestigungselemente 22,23 plastisch auf die dem ersten Schenkel 4 abgewandte Seite des Befestigungsabschnitts 21 umzuformen, wenn die Schelle 1 in einen geschlossenen Zustand überführt wird. Dies ist insbesondere im Vergleich des geöffneten (Fig. 13 Draufsicht unten) mit dem geschlossenen (Fig. 13 Draufsicht oben) Zustand der Schelle 1 zu erkennen. Die Schelle 1 kann so in einem geschlossenen Zustand sicher auf dem zu befestigenden rohrförmigen Gegenstand gehalten werden, ohne dass sich die somit erzeugte Verbindung der beiden Umfangsenden 3, 5 wieder lösen würde. Der Monteur der Schelle 1 kann diese nun mit entsprechenden Halteelementen an der Unterlage befestigen, ohne ein Außer-Eingriff-Kommen der Schelle mit dem Gegenstand durch Belastungen der Schelle 1, wie sie beispielsweise bei der Montage auftreten können, besorgen zu müssen. Die Schnittdarstellung A-A im rechten Teil der Fig. 13 zeigt die Schelle 1 mit einer Vorfixierungsvorrichtung im geschlossenen Zustand.

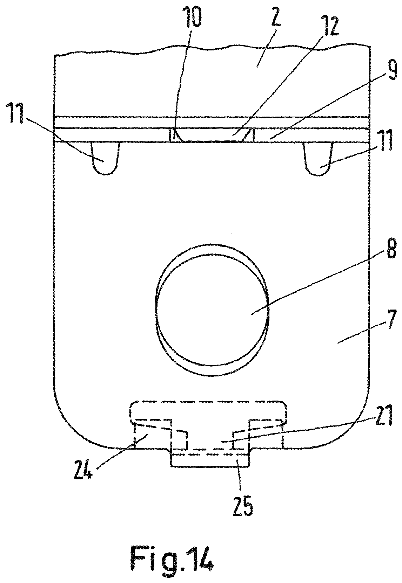

In Fig. 14 ist die Durchgangsöffnung 8 beispielhaft als Langloch ausgebildet.

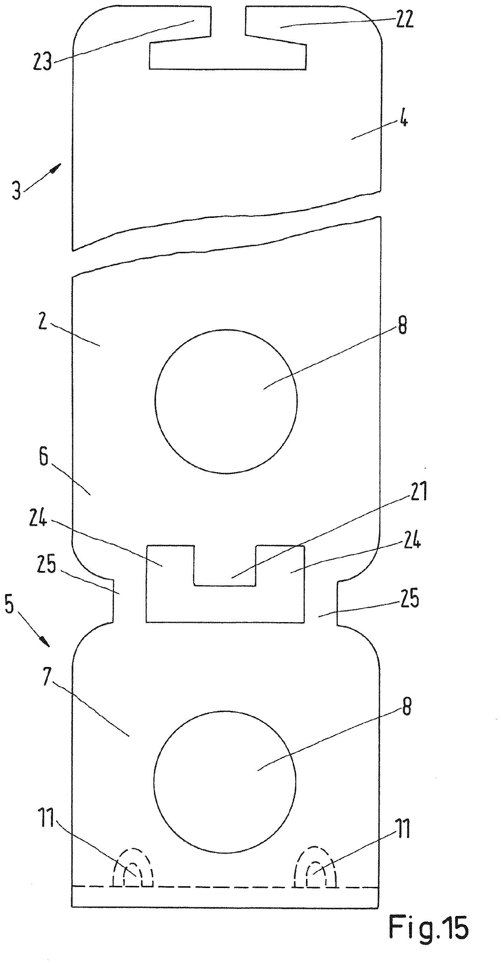

Fig. 15 zeigt ein aufgebogenes Schellenband 2, dass im Gegensatz zum Schellenband 2 des ersten Ausführungsbeispiels der Fig. 5 mit den konstruktiven Merkmalen einer Vorfixierungsvorrichtung versehen ist. Es ist eine erste mögliche Ausführungsform für diese Merkmale gezeigt. Im Endbereich des zweiten Schenkels 6 verjüngt sich dieser, um sich über einen zweifach ausgebildeten Steg 25 einstückig in die Lasche 7 fortzusetzen. In der axialen Mitte des zweiten Schenkels 6 ist der flächige Befestigungsabschnitt 21 ausgebildet. Dieser ist beidseitig von der Lücke 24 umgeben, in die die ersten und zweiten Befestigungselemente 22,23 des ersten Schenkels 4 hineinragen können.

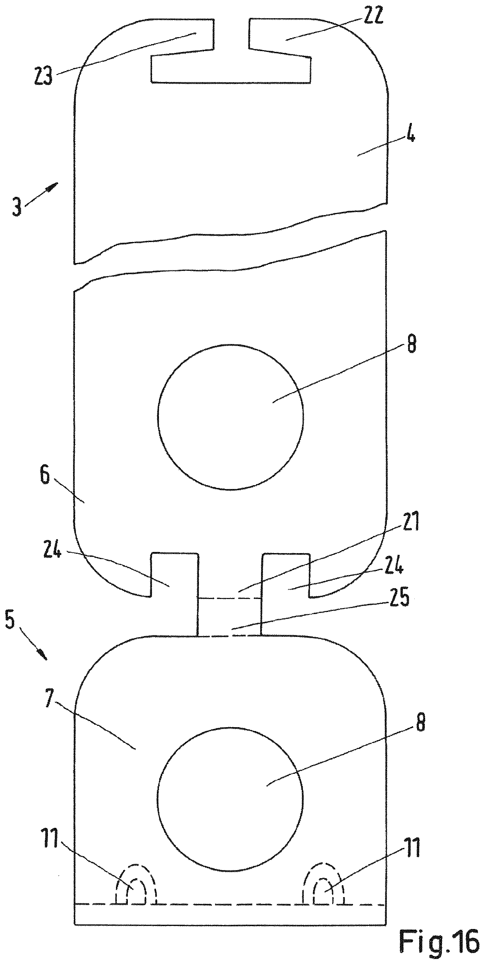

Eine zweite Ausführungsform der Vorfixierungsvorrichtung ist in Fig. 16 gezeigt. Wiederum ist ein aufgebogenes Schellenband 2 dargestellt, das an seinem zweiten Schenkel 6 in dessen axialer Mitte einen flächigen Befestigungsabschnitt 21 aufweist. Dieser ist von der Lücke 24 umgeben und ist seinerseits in den hier einfach ausgeführten Steg 25 fortgesetzt. Der Steg 25 stellt die Verbindung des zweiten Schenkels 6 mit der Lasche 7 her. Die Breite des Stegs 25 kann abhängig von den Anforderungen an der Schelle 1 variieren. Am ersten Schenkel 4 des Schellenbandes 2 sind wiederum erste und zweite Befestigungselemente 22, 23 vorgesehen, die in die Lücke 24 in einem zusammengebauten Zustand der Schelle 1 hineinragen.

## Patentansprüche

1. Schelle (1), insbesondere zum Befestigen von rohrförmigen Gegenständen an einer Unterlage, mit einem Schellenband (2) mit einem ersten Umfangsende (3), das einen ersten Schenkel (4) aufweist, und einem zweiten Umfangsende (5), das einen zweiten Schenkel (6) aufweist, und mit mindestens einer Lasche (7, 71), die auf mindestens einem der Schenkel (4, 6) angeordnet ist, wobei der erste und/oder zweite Schenkel (4, 6) und die auf diesem angeordnete Lasche (71, 7) einstückig ausgebildet sind, wobei das Schellenband (2) mindestens einen Vorsprung (12) aufweist, der mit der mindestens einen Lasche (7, 71) zusammenwirkt, **dadurch gekennzeichnet, dass** die Lasche (7, 71) auf einer Seite des Schenkels (4, 6) angeordnet ist, die gegenüberliegend von dem jeweils anderen Schenkel (4, 6) angeordnet ist.

2. Schelle nach Anspruch 1, **dadurch gekennzeichnet, dass** die mindestens eine Lasche (7, 71) jeweils einen umgebogenen Endabschnitt (9, 91) aufweist, der auf einer dem Schellenband (2) zugewandten Seite der Lasche (7, 71) angeordnet ist.

3. Schelle nach Anspruch 2, **dadurch gekennzeichnet, dass** der jeweils eine umgebogene Endabschnitt (9, 91) in eine dem Schenkel (4, 6), auf dem die den umgebogenen Endabschnitt (9 ,91) aufweisende Lasche (7, 71) angeordnet ist, abgewandte Richtung weist und eine Ausnehmung (10) aufweist.

4. Schelle nach Anspruch 3, **dadurch gekennzeichnet, dass** die jeweilige Ausnehmung (10) und der ihr assoziierte Vorsprung (12) formschlüssig miteinander in Eingriff stehen.

5. Schelle nach Anspruch 3 oder 4, **dadurch gekennzeichnet, dass** eine Erstreckung der Ausnehmung (10) in einer Umfangsrichtung des Schellenbandes (2) mindestens die Hälfte einer Erstreckung des Vorsprungs (12) in dieser Richtung umfasst.

6. Schelle nach einem der Ansprüche 1 bis 5, **dadurch gekennzeichnet, dass** der Vorsprung (12) in einer Axialrichtung des Schellenbandes (2) eine größere Erstreckung aufweist als in der Umfangsrichtung des Schellenbandes (2).

7. Schelle nach einem der Ansprüche 2 bis 6, **dadurch gekennzeichnet, dass** eine radiale Erstreckung des Vorsprungs (12) auf eine radiale Erstreckung des jeweiligen umgebogenen Endabschnitts (9, 91) abgestimmt ist.

8. Schelle nach einem der Ansprüche 1 bis 7, **dadurch gekennzeichnet, dass** der Vorsprung (12) eine erste (13) und eine zweite Flanke (14) in Umfangsrichtung des Schellenbandes (12) aufweist, wobei die erste Flanke (13) in einem spitzeren Winkel als die zweite Flanke (14) in das Schellenband (2) einmündet.

9. Schelle nach Anspruch 8, **dadurch gekennzeichnet, dass** die zweite Flanke (14) einen rechten Winkel relativ zum Schellenband (2) aufweist.

10. Schelle nach einem der Ansprüche 2 bis 9, **dadurch gekennzeichnet, dass** der erste und/oder der zweite Schenkel (4, 6) und die auf diesem angeordnete Lasche (71, 7) mindestens eine Versteifungssicke (111, 11) im Bereich ihres umgebogenen Endabschnitts (91, 9) aufweisen.

11. Schelle nach Anspruch 10, **dadurch gekennzeichnet, dass** der erste und/oder zweite Schenkel (6) und die auf diesem angeordnete Lasche (71, 7) mindestens eine Versteifungssicke (111, 11) auf jeder Seite der Ausnehmung (10) ihres umgebogenen Endabschnitts (91, 9) aufweisen.

12. Schelle nach einem der Ansprüche 1 bis 11, **dadurch gekennzeichnet, dass** die Lasche (7) lediglich auf einer dem ersten Schenkel (4) abgewandten Seite des zweiten Schenkels (6) angeordnet und der erste Schenkel (4) durch eine Abkröpfung aus dem Schellenband (2) gebildet ist, die mindestens eine Versteifungssicke (16) aufweist.

13. Schelle nach einem der Ansprüche 1 bis 11, **dadurch gekennzeichnet, dass** der erste Schenkel (4) im geöffneten Zustand der Schelle (1) mindestens ein in Richtung auf den zweiten Schenkel (6) herausstehendes Befestigungselement (22, 23) und der zweite Schenkel (6) einen Befestigungsabschnitt (21) aufweist, der in eine Lücke (24) zwischen dem Befestigungselement (22, 23) und einem dem Befestigungselement (22, 23) gegenüberliegenden Nachbarbereich des ersten Schenkels (4) einführbar ist und dass im geschlossenen Zustand der Schelle (1) das mindestens eine Befestigungselement (22, 23) plastisch auf die vom ersten Schenkel (4) abgewandte Seite des Befestigungsabschnitts (21) umgeformt ist.

14. Schelle nach einem der Ansprüche 1 bis 13, **dadurch gekennzeichnet, dass** in einem Übergangsbereich zwischen dem jeweiligen Schenkel (4, 6) und der assoziierten Lasche (7,71) Aussparungen vorgesehen sind, so dass sich das Schellenband (2) in einer Axialrichtung der Schelle verjüngt.

15. Schelle nach Anspruch 14, **dadurch gekennzeichnet, dass** die Lasche (7, 71) ein Endstück des jeweiligen Umfangsendes (3, 5) des Schellenbandes (2) bildet, wobei die Lasche (7, 71) zur Anordnung auf dem entsprechenden Schenkel (4, 6) im Bereich der Aussparungen in Richtung des Schellenbandes (2) umgebogen ist.

## Claims

1. Clamp (1), in particular for fastening tubular articles to a base, having a clamp band (2) with a first peripheral end (3), which has a first leg (4), and a second peripheral end (5), which has a second leg (6), and with at least one tab (7, 71), which is arranged on at least one of the legs (4, 6), wherein the first and/or second leg (4, 6) and the tab (71, 7) arranged thereon are formed in one piece, wherein the clamp band (2) has at least one projection (12), which cooperates with the at least one tab (7, 71), **characterised in that** the tab (7, 71) is arranged on one side of the leg (4, 6), which is arranged opposite the other respective leg (4, 6).

2. Clamp according to claim 1, **characterised in that** the at least one tab (7, 71) has in each case a bent end section (9, 91), which is arranged on a side of the tab (7, 71) that faces the clamp band (2).

3. Clamp according to claim 2, **characterised in that** the respectively bent end section (9,91) points in a direction facing away from the leg (4, 6) on which the tab (7, 71) having the bent end section (9, 91) is arranged, and has a recess (10).

4. Clamp according to claim 3, **characterised in that** the respective recess (10) and the projection (12) associated therewith engage with one another in a form-fitting manner.

5. Clamp according to claim 3 or claim 4, **characterised in that** an extension of the recess (10) in a circumferential direction of the clamp band (2) is at least half of the extension of the projection (12) in this direction.

6. Clamp according to any of claims 1 to 5, **characterised in that** the projection (12) in an axial direction of the clamp band (2) has a greater extension than in the peripheral direction of the clamp band (2).

7. Clamp according to any of claims 2 to 6, **characterised in that** a radial extension of the projection (12) is coordinated with a radial extension of the respective bent end section (9, 91).

8. Clamp according to any of claims 1 to 7, **characterised in that** the projection (12) has a first flank (13) and a second flank (14) in the circumferential direction of the clamp band (12), wherein the first flank (13) leads into the clamp band (2) at a more acute angle than the second flank (14).

9. Clamp according to claim 8, **characterised in that** the second flank (14) is at right angles to the clamp band (2).

10. Clamp according to any of claims 2 to 9, **characterised in that** the first and/or the second leg (4, 6) and the tab (71, 7) arranged thereon have at least one reinforcing bead (111, 11) in the region of their bent end section (91, 9).

11. Clamp according to claim 10, **characterised in that** the first and/or second leg (6) and the tab (71, 7) arranged thereon have at least one reinforcing bead (111, 11) on each side of the recess (10) of their bent end section (91, 9).

12. Clamp according to any of claims 1 to 11, **characterised in that** the tab (7) is arranged only on a side of the second leg (6) that faces away from the first leg (4) and the first leg (4) is formed by a section angled out from the clamp band (2), said angled section having at least one reinforcing bead (16).

13. Clamp according to any of claims 1 to 11, **characterised in that** in the open state of the clamp (1), the first leg (4) has at least one fastening element (22, 23) that protrudes in the direction of the second leg (6), and the second leg (6) has a fastening section (21) that is able to be introduced into a gap (24) between the fastening element (22, 23) and an adjacent region, located opposite the fastening element (22, 23), of the first leg (4), and **in that**, in the closed state of the clamp (1), the at least one fastening element (22, 23) is plastically deformed onto the side of the fastening section (21) that faces away from the first leg (4).

14. Clamp according to any of claims 1 to 13, **characterised in that** recesses are provided in a transition region between the respective leg (4, 6) and the associated tab (7, 71) such that the clamp band (2) tapers in an axial direction of the clamp.

15. Clamp according to claim 14, **characterised in that** the tab (7, 71) forms an end piece of the respective peripheral end (3, 5) of the clamp band (2), wherein the tab (7, 71) is bent for arrangement on the corresponding leg (4, 6) in the region of the recesses in the direction of the clamp band (2).

## Revendications

1. Collier de serrage (1), en particulier pour la fixation d'objets tubulaires à un support, avec une bande de collier (2) avec une première extrémité circonférentielle (3), qui présente une première branche (4), et une deuxième extrémité circonférentielle (5), qui présente une deuxième branche (6), et avec au moins une patte (7, 71), qui est disposée sur au moins une des branches (4, 6), dans lequel les première et/ou deuxième branches (4, 6) et la patte (71, 7) disposée sur celle-ci sont formées d'un seul tenant, dans lequel la bande de collier (2) présente au moins une saillie (12), qui coopère avec l'au moins une patte (7, 71), **caractérisé en ce que** la patte (7, 71) est disposée sur un côté de la branche (4, 6) qui est disposée sur un côté opposé à respectivement l'autre branche (4, 6).

2. Collier de serrage selon la revendication 1, **caractérisé en ce que** l'au moins une patte (7, 71) présente respectivement une section d'extrémité repliée (9, 91), qui est disposée sur un côté de la patte (7, 71) tourné vers la bande de collier (2).

3. Collier de serrage selon la revendication 2, **caractérisé en ce que** la respectivement une section d'extrémité repliée (9, 91) est tournée dans une direction opposée à la branche (4, 6), sur laquelle la patte (7, 71) présentant la section d'extrémité repliée (9, 91) est disposée, et présente un évidement (10).

4. Collier de serrage selon la revendication 3, **caractérisé en ce que** l'évidement (10) respectif et la saillie (12) qui lui est associée sont en prise l'un avec l'autre par correspondance de forme.

5. Collier de serrage selon la revendication 3 ou 4, **caractérisé en ce qu'**une extension de l'évidement (10) dans une direction circonférentielle de la bande de collier (2) comprend au moins la moitié d'une extension de la saillie (12) dans cette direction.

6. Collier de serrage selon l'une quelconque des revendications 1 à 5, **caractérisé en ce que** la saillie (12) présente une extension plus grande dans une direction axiale de la bande de collier (2) que dans la direction circonférentielle de la bande de collier (2).

7. Collier de serrage selon l'une quelconque des revendications 2 à 6, **caractérisé en ce qu'**une extension radiale de la saillie (12) est adaptée à une extension radiale de la section d'extrémité repliée (9, 91) respective.

8. Collier de serrage selon l'une quelconque des revendications 1 à 7, **caractérisé en ce que** la saillie (12) présente un premier (13) et un deuxième flanc (14) dans une direction circonférentielle de la bande de collier (12), dans lequel le premier flanc (13) débouche dans la bande de collier (2) en un angle plus aigu que le deuxième flanc (14).

9. Collier de serrage selon la revendication 8, **caractérisé en ce que** le deuxième flanc (14) présente un angle droit par rapport à la bande de collier (2).

10. Collier de serrage selon l'une quelconque des revendications 2 à 9, **caractérisé en ce que** la première et/ou la deuxième branche (4, 6) et la patte (71, 7) disposée sur celle-ci présentent au moins une nervure de renfort (111, 11) au niveau de leur section d'extrémité repliée (91, 9).

11. Collier de serrage selon la revendication 10, **caractérisé en ce que** la première et/ou deuxième branche (6) et la patte (71, 7) disposée sur celle-ci présentent au moins une nervure de renfort (111, 11) de chaque côté de l'évidement (10) de leur section d'extrémité repliée (91, 9).

12. Collier de serrage selon l'une quelconque des revendications 1 à 11, **caractérisé en ce que** la patte (7) est disposée seulement sur un côté de la deuxième branche (6) opposé à première branche (4) et la première branche (4) est formée par un coude de la bande de collier (2), qui présente au moins une nervure de renfort (16).

13. Collier de serrage selon l'une quelconque des revendications 1 à 11, **caractérisé en ce que** la première branche (4) présente à l'état ouvert du collier de serrage (1) au moins un élément de fixation (22, 23) faisant saillie en direction de la deuxième branche (6) et la deuxième branche (6) présente une section de fixation (21), qui peut être introduite dans un espace vide (24) entre l'élément de fixation (22, 23) et une zone voisine de la première branche (4) opposée à l'élément de fixation (22, 23) et qu'à l'état fermé du collier de serrage (1) l'au moins un élément de fixation (22, 23) est déformé plastiquement sur le côté de la section de fixation (21) opposé à la première branche (4).

14. Collier de serrage selon l'une quelconque des revendications 1 à 13, **caractérisé en ce que** dans une zone de transition entre la branche respective (4, 6) et la patte associée (7, 71) sont prévus des évidements de telle sorte que la bande de collier (2) se rétrécisse dans une direction axiale du collier de serrage.

15. Collier de serrage selon la revendication 14, **caractérisé en ce que** la patte (7, 71) forme un embout de l'extrémité circonférentielle respective (3, 5) de la bande de collier (2), dans lequel la patte (7, 71) est repliée pour être disposée sur la branche correspondante (4, 6) dans la zone des évidements dans la direction de la bande de collier (2).
